# EUROPEAN PATENT APPLICATION

(11) **EP 2 528 221 A2**
(43) Date of publication of application: **28.11.2012**
(21) Application number: 12165531.0
(22) Date of filing: 25.04.2012
(51) Int. Cl.: H02M 7/219, H02M 7/217

(54) **Multi-phase active rectifier**

(30) Priority: 26.05.2011 US 201113116424
(71) Applicant: Hamilton Sundstrand Corporation, Windsor Locks, CT 06096-1010 (US)
(72) Inventor: Clemmons, James H., Freeport, 61032 (US); Wlaznik, Nicholas, Rockford, IL Illinois 61109 (US)
(74) Representative: Hughes, Andrea Michelle

(57) **Abstract**

A multi-phase active rectifier includes a plurality of active switching devices selectively controlled to convert a plurality of alternating current (AC) input voltages to a direct current (DC) output voltage. Control of the active switching devices is provided by a controller that includes an outer control loop for regulating the DC output voltage to a desired value, and an inner current loop for shaping the AC line current. The outer control loop compares the DC output to a threshold value to generate an error value, and multiples the error value with the plurality of monitored AC input voltages to generate modified AC input voltages. An inner control loop compares the modified AC input voltages with monitored AC line current values to generate a plurality of difference signals used to selectively control the plurality of active switching devices.

## Description

### BACKGROUND

The present invention is related to power conversion, and in particular to multi-phase active rectifiers.

In the case of rectifiers, the simplest and least expensive type of rectifier uses a full- or half-bridge of diodes to convert single- or multi-phase alternating current (AC) input into direct current (DC) output. However, this type of passive rectifier results in distortion and phase-shifting of the line current relative to the line voltage that reduces efficiency of the rectifier.

Active rectifiers replace the passive diode components with active switching devices (e.g., metal-oxide semiconductor field-effect transistors (MOSFETs), insulated-gate bipolar transistors (IGBT), etc.) that are selectively turned On and Off to control the rectification of the AC input to a DC output. Benefits of active rectifiers include the ability to regulate the DC output voltage and modify the shape of the line currents drawn by the active rectifier to increase efficiency (e.g., power factor correction). A variety of control schemes are available to meet these goals, however, many of the control schemes employ complex transformations that require digital signal processors to execute.

### SUMMARY

A multi-phase active rectifier includes a plurality of active switching devices selectively controlled to convert a plurality of alternating current (AC) input voltages to a direct current (DC) output voltage. Control of the active switching devices is provided by a controller that includes an outer control loop for regulating the DC output voltage to a desired value, and an inner current loop for shaping the AC line current. The outer control loop compares the DC output to a threshold value to generate an error value, and multiples the error value with the plurality of monitored AC input voltages to generate modified AC input voltages. An inner control loop compares the modified AC input voltages with monitored AC line current values to generate a plurality of difference signals used to selectively control the plurality of active switching devices.

### BRIEF OF THE DRAWINGS

FICr. 1 is a circuit diagram of a power conversion system according to an embodiment of the present invention.

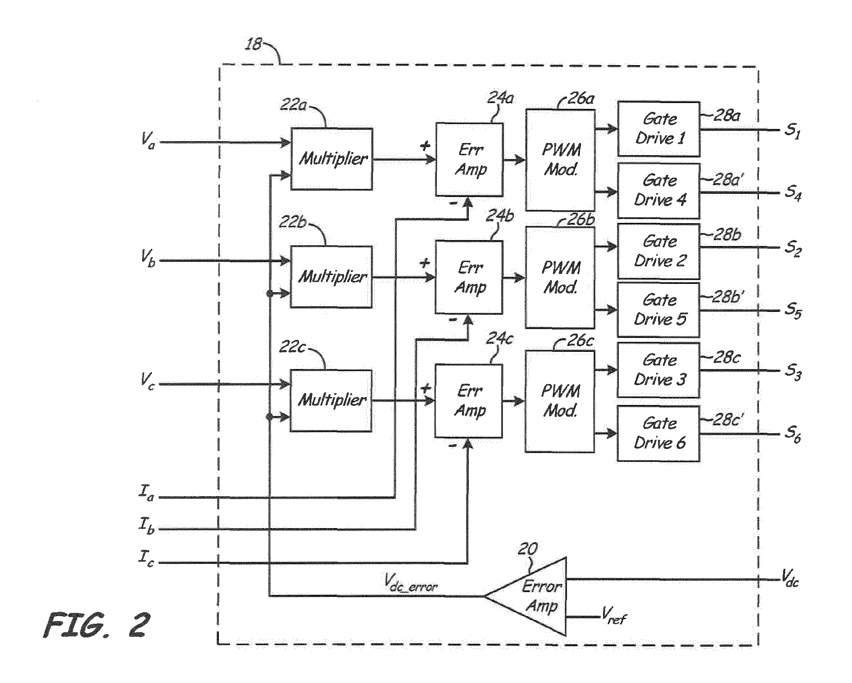

FIG. 2 is a functional block diagram of a controller employed in the power conversion system according to an embodiment of the present invention.

### DETAILED DESCRIPTION

The present invention provides multi-phase active rectifier system that employs an analog controller for providing DC output voltage regulation and suppression of harmonics on the line currents (i.e., power factor correction).

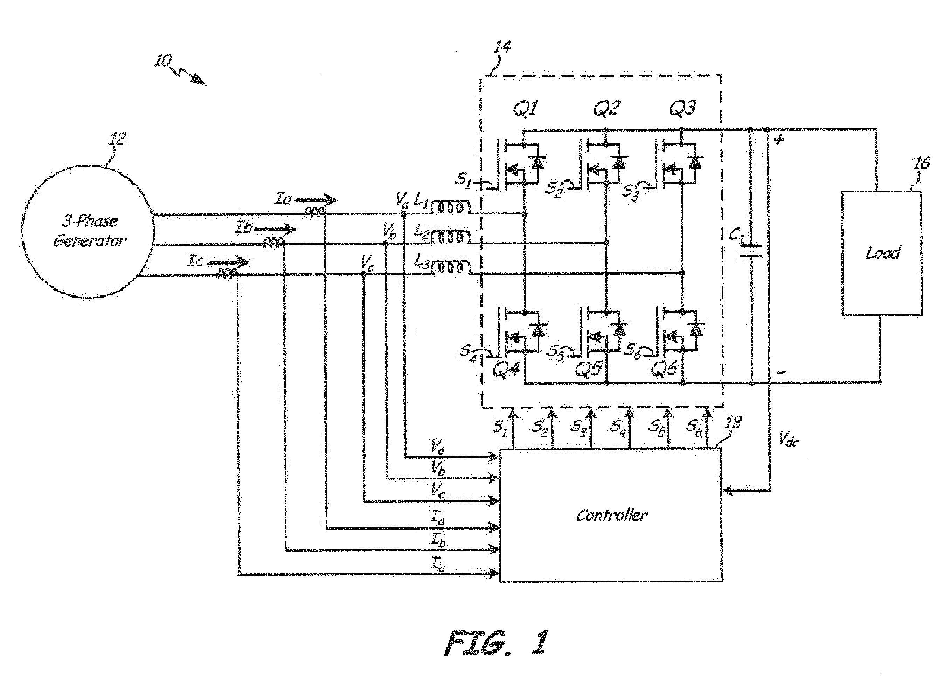

FIG. 1 is a circuit diagram of power conversion system 10 according to an embodiment of the present invention. Power conversion system 10 includes electrical generator 12, active rectifier 14, load 16, and controller 18. Electrical generator 12 generates multi-phase alternating current (AC) voltage *Va, Vb, Vc* for provision to active rectifier 14 via inductors L1, L2, and L3, respectively, which act to smooth line currents *Ia, Ib, Ic.* Active rectifier 14 converts the multi-phase AC input voltages *Va, Vb, Vc* to a DC output voltage *Vdc* for provision to load 16. Capacitor C1 is connected in parallel with load 16 across the DC outputs to provide smoothing to the DC output voltage *Vdc.*

Active rectifier 14 includes a plurality of active switching devices Q1-Q6 that are selectively turned On and off to rectify the AC input voltages *Va, Vb, Vc.* In the embodiment illustrated in FIG. 1, active switching devices Q1-Q6 are represented as metal-oxide semiconductor field-effect transistors (MOSFETs), although in other embodiments other well known switching devices, such as insulated gate bipolar transistors (IGBTs), may be employed.

Gate drive signals S1-S6 applied at the respective control terminals (e.g., gate) of each switching device Q1-Q6 determine whether the switching device is On or Off. When On, the switching device allows current supplied by the AC generator to increase/decrease the charge across capacitor C1. Selective control of the state of switching devices Q1-Q6 through pulse width modulation allows controller 18 to regulate the DC output voltage *Vdc* to a desired level. To accommodate the positive and negative half-cycles of the AC input voltage, each AC input phase is connected to a pair of switching devices including a high-side switch and a low-side switch. Switching devices Q1-Q3 are high-side switches and switching devices Q4-Q6 are low-side switches. For example, phase A of the AC input is connected to active switching devices Q1 and Q4. During the positive half-cycle, switching device Q1 is selectively controlled to increase the voltage across capacitor C1 and switching device Q4 is selectively controlled to decrease the voltage across capacitor C1. During the negative half-cycle, switching device Q1 is selectively controlled to decrease the voltage across capacitor C1 and switching device Q4 is selectively controlled to increase the voltage across capacitor C1. Likewise, switching devices Q2 and Q5 are connected to phase B of the AC input and switching devices Q3 and Q6 are connected to phase C of the AC input.

Controller 18 monitors the DC output voltage *Vdc,* the AC line voltages *Va, Vb,* and *Vc*, and AC line currents *Ia, Ib,* and *Ic.* For the sake of simplicity, the inputs provided to controller 18 are labeled to correspond with the voltage and/or current being monitored (e.g., AC line voltages *Va, Vb,* and *Vc,* and AC line currents *Ia, Ib,* and *Ic*), but it should be understood that the inputs provided to controller 18 are typically signals representative of the monitored voltage and/or current, Based on these inputs, controller 18 generates gate drive signals S1, S2, S3, S4, S5, S6 provided to the gate inputs of switches Q1, Q2, Q3, Q4, Q5 and Q6, respectively. By selectively controlling active switching devices Q1-Q6, controller 18 regulates the DC output voltage *Vdc* to a desired value. In addition, controller 18 acts to minimize distortion in the current drawn by active rectifier 14 to improve the efficiency of active rectifier 14. Efficiency is maximized when the line currents *Ia, Ib,* and *Ic* are sinusoidal and in-phase with the line voltages *Va, Vb, Vc.*

To provide the regulation of the DC output voltage *Vdc* and power factor correction, controller 18 employs a dual loop control loop. A first or outer control loop regulates the DC output voltage *Vdc* and a second or inner control loop shapes the AC line currents *Ia, Ib, Ie* to be sinusoidal and in-phase with the AC line voltages *Va, Vb, Vc.*

FIG. 2 is a functional block diagram of controller 18 employed in the power conversion system according to an embodiment of the present invention. Controller 18 monitors the AC line voltages *Va, Vb, Vc,* AC line currents *Ia, Ib, Ic,* and the monitored DC output voltage *Vdc.* For the sake of simplicity, controller 18 is illustrated as receiving as inputs AC line currents *Ia, Ib, Ic,* although in reality controller 18 would receive a voltage signal generated by current sensors representative of the AC line currents *Ia, Ib, Ic.* In response to these inputs, controller 18 generates gate drive signals S1-S6 for provision to the gates (i.e., control terminals) of active switching devices Q1-Q6.

The first or outer control loop includes error amplifier circuit 20 and multipliers 22a, 22b, and 22c. The monitored DC output *Vdc* is provided as an input to the first control loop. Error amplifier circuit 20 compares the monitored DC output *Vdc* to a reference voltage *Vref* to generate an amplified error signal *Vdc_Verror,* which represents the difference or error between the monitored DC output voltage and the desired DC output voltage. Multipliers 22a, 22b, and 22c multiply the amplified error signal *Vdc_error* with each of the respective AC line voltages *Va, Vb, Vc,* respectively, to generate modified AC input voltages *Va_m, Vb_m, Vc_m*. The modified AC input voltages *Va_m, Vb_m, Vc_m* have a phase and frequency equal to the monitored AC line voltages *Va, Vb, Vc* and an amplitude representative of the difference or error between the desired DC output voltage *Vref* and the monitored DC output voltage *Vdc.* The amplitude of the modified AC input voltages are used to regulate the duration of PWM pulses provided to active switching devices Q1-Q6, thereby regulating the DC output voltage *Vdc* to a desired value.

The second or inner control loop includes error amplifier circuits 24a, 24b, and 24c. The monitored AC line currents *Ia, Ib,* and *Ic* are provided as inputs to the second control loop, along with the modified AC input signals *Va_m, Vb_m, Vc_m.* Each error amplifier circuit 24a, 24b, and 24c is a summer connected to calculate a difference between the modified AC input voltages *Va_m, Vb_m, Vc_m* and the monitored AC line currents *Ia, Ib, Ic,* respectively, to difference signals *Va_d, Vb_d, Vc_d.* By subtracting the monitored AC line currents *Ia, Ib, Ic* from the modified AC input voltages *Va_m, Vb_m, Vc_m,* the resulting difference signals *Va_d, Vb_d, Vc_d* when applied to PWM modulators 26a, 26b, 26c, respectively, will shape The line currents drawn by active rectifier 14 to resemble the sinusoidal AC line voltages *Va, Vb, Vc.*

The resulting difference signals calculated by each respective error amplifier circuits 24a, 24b, 24c are applied to pulse width modulator (PWM) circuits 26a, 26b, and 26c, respectively. Based on the received difference signals, PWM modulators 26a, 26b and 26c generate gate drive command signals provided to gate drive circuits 28a, 28a', 28b, 28b', 28c, and 28c', which generate the gate drive signals S1-S6, respectively, provided to active switching devices Q1-Q6. In one embodiment, PWM modulators 26a, 26b, and 26c compare the difference signals *Va_d, Vb_d, Vc_d* to a sawtooth wave having a fixed frequency and amplitude to generate the pulse width modulated signals provided as commands to the respective gate drive circuits. In response to the PWM signals provided by PWM modulators 26a, 26b, 26c, gate drive circuits 28a, 28a', 28b, 28b', 28c, and 28c' generate drive signals S1-S6 that selectively turn On and Off active switching devices Q1-Q6, respectively.

In this way, the present invention provides DC output voltage regulation and power factor correction (i.e., suppression of line current harmonics) in multi-phase active rectifiers.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. For example, the present invention has been described with respect to analog signal processing, but the functions performed by controller 18 can be performed by either analog circuitry or digital circuitry such as a digital signal processor. Therefore, it is intended that the invention not be limited to the particular embodiment(s) disclosed, but that the invention will include all embodiments falling within the scope of the appended claims.

## Claims

1. A controller for a multi-phase active rectifier that includes a plurality of active switching devices (Q1-Q6) selectively controlled by the controller to convert a plurality of alternating current (AC) input voltages to a direct current (DC) output voltage , the controller comprising:
an outer control loop connected to receive a monitored DC output voltage and monitored AC input voltages, the outer control loop including a first error amplifier (20) for comparing the DC output voltage to a reference voltage to generate an error signal and a plurality of multipliers (22) for multiplying each of the monitored AC input voltages with the error signal to generate modified AC input voltages;
an inner control loop connected to receive the modified AC input voltages and signals representative of monitored AC line currents, the inner control loop including a plurality of error amplifier circuits (24) for comparing the modified AC input voltages to the signals representative of the monitored AC line currents to generate a plurality of difference signals; and
a plurality of pulse width modulation (PWM) circuits(26) that generate PWM signals based on the plurality of difference signals for provision to the plurality of active switching devices associated with the multi-phase active rectifier.

2. The controller of claim 1, wherein the outer control loop and the inner control loop are implemented with analog circuitry.

3. The controller of claim 1, wherein the outer control loop and the inner control loop are implemented with digital circuitry.

4. The controller of claim 1, wherein the multi-phase active rectifier is a three-phase active rectifier.

5. A multi-phase active rectifier system comprising:
a multi-phase active rectifier (14) for converting a plurality of alternating current (AC) input voltages to a direct current (DC) output voltage, the multi-phase active rectifier having a plurality of active switching devices connected between the plurality of AC input voltages and the DC output voltage; and
a controller (18) connected to selectively turn the plurality of active switching devices On and Off to regulate the DC output voltage, the controller including:
an outer control loop connected to receive a monitored DC output voltage and monitored AC input voltages, the outer control loop including a first error amplifier circuit (20) for comparing the DC output voltage to a reference voltage to generate an error signal and a plurality of multipliers (22) for multiplying each of the monitored AC input voltages with the error signal to generate modified AC input voltages;
an inner control loop connected to receive the modified AC input voltages and signals representative of monitored AC line currents, the inner control loop including a plurality of error amplifier circuits (24) for comparing the modified AC input voltages to the signals representative of the monitored AC line currents to generate a plurality of difference signals; and
a plurality of pulse width modulation (PWM) circuits (26) that generate PWM signals based on the plurality of difference signals for provision to the plurality of active switching devices associated with the multi-phase active rectifier.

6. The multi-phase active rectifier system of claim 5, wherein the multi-phase active rectifier is a three-phase rectifier that converts first, second and third AC input voltages to the DC output voltage.

7. The multi-phase active rectifier system of claim 5, wherein the outer control loop and the inner control loop are implemented with analog circuitry.

8. The multi-phase active rectifier system of claim 5, wherein the outer control loop and the inner control loop are implemented with digital circuitry.

9. The multi-phase active rectifier system of claim 5, wherein the plurality of active switching devices are metal-oxide semiconductor field-effect transistors (MOSFETs).

10. The multi-phase active rectifier system of claim 5, wherein the plurality of active switching devices are insulated bipolar transistors (IGBTs).

11. A method of controlling a three-phase active rectifier that includes a plurality of active switching devices selectively controlled by a controller to convert first, second and third alternating current (AC) line voltages to a direct current (DC) output, the method comprising:
comparing a DC output voltage to a reference voltage to generate an amplified error signal;
multiplying each of the first, second and third AC line voltages with the amplified error signal to generate first, second and third modified AC line voltages;
comparing the first, second and third modified AC input voltages to signals representative of first, second and third AC line currents, respectively, to generate first, second and third difference signals; and
generating pulse width modulation (PWM) signals for each of the plurality of active switching devices based on the first, second and third difference signals.
